# EUROPÄISCHE PATENTSCHRIFT

(11) **EP 0 834 248 B1**
(45) Veröffentlichungstag und Bekanntmachung des Hinweises auf die Patenterteilung: **27.08.2003**
(21) Anmeldenummer: 97115214.5
(22) Anmeldetag: 03.09.1997
(51) Int. Cl.: A01G 3/053, A01G 3/06

(54) **Motorbetriebene Heckenschere**
Motor-driven hedge trimmer
Taille-haie motorisé

(30) Priorität: 02.10.1996 DE 19640653
(43) Veröffentlichungstag der Anmeldung: 08.04.1998
(73) Patentinhaber: GARDENA Kress + Kastner GmbH, D-89079 Ulm (DE)
(72) Erfinder:
(74) Vertreter: Patentanwälte Ruff, Wilhelm, Beier, Dauster & Partner

(56) Entgegenhaltungen:
- EP-A- 0 515 909
- FR-A- 2 711 886
- FR-A- 2 751 578
- GB-A- 2 227 915
- US-A- 3 838 508
- US-A- 4 651 420
- US-A- 5 031 395
- US-A- 5 261 162
- US-E- R E34 358

## Beschreibung

Die vorliegende Erfindung betrifft eine motorbetriebene Heckenschere mit einem Arbeitskopf nach dem Oberbegriff des Anspruchs 1.

Mit herkömmlichen Heckenscheren ist die Bearbeitung großer und hoher Hecken und Sträucher mühsam und schwierig. Zum Schneiden der Oberseite der jeweiligen Hecke ist es in der Regel notwendig, auf eine Leiter oder einen Stuhl zu steigen, um die Heckenschere entsprechend führen zu können. Darüber hinaus ist der Arbeitsradius herkömmlicher Heckenscheren relativ begrenzt, so daß beim Schneiden häufig abgesetzt und wieder neu angesetzt werden muß. Hierdurch ist zum einen die Schneidleistung gering, zum anderen ist es schwierig, einen geraden und gleichmäßigen Schnitt zu erreichen.

Die FR 2 711 886 zeigt eine motorbetriebene Heckenschere mit einem langen Stiel, an dessen einem Ende ein Motor angeordnet ist und an dessen anderem Ende ein Arbeitskopf mit einem Schneidwerkzeug angeordnet ist. Zum Führen sowie Bedienen des Gerätes ist eine Hand-griffanordnung vorgesehen, wobei diese aus zwei fest mit dem Stiel verbundenen Griffteilen besteht. Der eine Griffteil ist am Ende des Stieles angeordnet, der andere als abstehendes T-Stück ein Stück oberhalb davon. Der Arbeitskopf steht in einem Winkel von dem Stiel ab, der veränderbar ist.

Die US-PS 4,651,420 beschreibt eine Universal-Schneidemaschine mit einem langen Stiel, an dessen einem Ende ein Arbeitskopf mit Schneidwerkzeug und an dessen anderem Ende ein Antrieb samt Handgriffanordnung vorgesehen ist. Die Handgriffanordnung besteht aus zwei Griffen, von denen einer als abstehender Handgriff ausgebildet ist, der andere als Grfiffverdickung um den Stiel herum. Der Arbeitskopf ist um eine senkrecht zu der Stiellängsrichtung verlaufende Achse schwenkbar.

Die GB 2 227 915 beschreibt eine motorbetriebene Heckenschere mit einem Stiel, an dessen einem Ende ein schwenkbar gelagerter Arbeitskopf mit Schneidwerkzeug und an dessen anderem Ende ein Antrieb mit Handgriffanordnung angeordnet ist. Die Schwenkbarkeit des Arbeitskopfes erfolgt um eine Achse, die senkrecht zur Längsrichtung des Stieles verläuft.

Die US-PS 5,251,162 beschreibt eine Heckenschere mit einem langen Stiel, an dessen einem Ende ein Schneidwerkzeug und an dessen anderem Ende ein Antrieb vorgesehen ist. Das Schneidwerkzeug ist in eine Transportstellung schwenkbar, in der es zur Verkürzung der Gesamtlänge parallel an dem Stiel anliegt. Dabei wird in dieser Transportstellung über eine Schalteinrichtung das Einschalten des Antriebs verhindert.

Der vorliegenden Erfindung liegt daher die Aufgabe zugrunde, eine Heckenschere der eingangs genannten Art zu schaffen, die die Nachteile herkömmlicher Heckenscheren beseitigt. Insbesondere soll die Handhabung der Heckenschere erleichtert und eine verbesserte Schnittführung erreicht werden, so daß eine hohe Schneidleistung und ein gleichmäßiger Schnitt auch an unzugänglichen Bereichen der zu bearbeitenden Hecken bzw. Sträucher bewirkt werden können.

Diese Aufgabe wird bei einer Heckenschere der eingangs genannten Art erfindungsgemäß durch die Merkmale des Anspruchs 1 gelöst.

Unter Stiel ist dabei nicht nur ein Stab zu verstehen, sondern als Stiel kann auch allgemein ein länglicher Träger, der mehrere Streben aufweisen kann, vorgesehen sein. Vorzugsweise ist der Stiel allerdings rohrförmig ausgebildet.

Durch die Verlegung des Arbeitskopfes und des Schneidwerkzeuges weg von der Handgriffanordnung erhält die Heckenschere einen wesentlich größeren Arbeitsradius. Hierdurch können vom Bediener sicher am Boden stehend auch weiter entfernte und unzugängliche, wie beispielsweise höher liegende Bereiche bearbeitet werden. Ferner werden die Hand- bzw. Armbewegungen des Bedieners zur Führung der Heckenschere durch die stielförmige Beabstandung des Arbeitskopfes hebelartig in einen wesentlich größeren Schnittweg umgesetzt. Zum einen kann hierdurch mit nur kleinen Arm- und Handbewegungen eine große Schnittleistung erreicht werden. Zum anderen kann die Handgriffanordnung immer nahe am Körper geführt werden, so daß keine großen und ermüdende Auslenkungen und Bewegungen der Arme erforderlich sind. Durch die hebelartige Umsetzung wird auch ein sehr gleichmäßiger Schnitt bewirkt, da das Schneidwerkzeug mit einer kleinen und gut koordinierbaren Handbewegung vom Bediener an einer Stelle stehend über einen großen Bereich geführt werden kann.

Darüber hinaus kann durch die Einstellbarkeit der Lage und Position des Arbeitskopfes relativ zu der Handgriffanordnung eine Anpassung an den jeweiligen Benutzer und die jeweilige zu bearbeitende Fläche vorgenommen werden.

Erfindungsgemäß ist das Schneidblatt senkrecht zur Längsrichtung des Stieles auf beide Seiten desselben schwenkbar. Hierdurch ist das Schneidblatt immer richtig anstellbar, d.h. das Schneidblatt, das eine bevorzugte Schneidseite hat, kann immer mit der richtigen Seite unter Einstellung des gewünschten Winkels relativ zu dem Stiel auf die zu schneidende Fläche gesetzt werden. Dabei beträgt der Einstellbereich auf beiden Seiten des Stieles zumindest jeweils 30°, insbesondere zumindest jeweils 45°. Der gesamte Einstellbereich beträgt vorzugsweise zumindest 180°, insbesondere zumindest 225°.

Bei der Erfindung ist der Arbeitskopf in eine Transport- bzw. Lagerstellung schwenkbar, in der die gesamte Länge der Heckenschere im wesentlichen durch die Länge des Stieles und der ggf. darüber hinausragenden Handgriffanordnung bestimmt ist. Das Schneidwerkzeug kann hierzu vorzugsweise in eine zu dem Stiel im wesentlichen parallele und diesem benachbarte Stellung gebracht werden derart, daß das Schneidwerkzeug und der Stiel die beiden Schenkel eines U bilden. Dies besitzt den Vorteil, daß die Sperrigkeit der Heckenschere trotz der stielartigen Verlängerung wesentlich reduziert werden kann.

Erfindungsgemäß wird beim Schwenken des Schneidwerkzeuges in die Transport- bzw. Lagerstellung der Antrieb automatisch abgeschaltet. Hierzu kann ein Endschalter vorgesehen sein, der beim Schwenken des Schneidwerkzeuges aus dem Arbeitsbereich betätigt wird und den Stromkreis unterbricht.

Gemäß einer bevorzugten Ausführungsform der Erfindung kann der Arbeitskopf relativ zur Handgriffanordnung um zumindest eine Achse geschwenkt und in verschiedenen Stellungen festgestellt werden. Insbesondere kann der Arbeitskopf relativ zu dem Stiel um eine zu dessen Längsrichtung senkrechte Achse geschwenkt werden. Die Ausrichtung des Schneidwerkzeuges ist also für verschiedene Schnittführungen einstellbar. Zweckmäßigerweise kann das balkenförmige Schneidwerkzeug der Schere zum Schneiden der senkrechten Seite einer Hecke in eine zu dem Stiel im wesentlichen parallele und diesen verlängernde Richtung und zum Schneiden geneigter Flächen und einer Oberseite von Hecken in eine zu dem Stiel abgewinkelte Richtung eingestellt werden.

Um die Ausrichtung des Schneidwerkzeuges an die Schneidrichtung und den Bediener, insbesondere rechts- und linkshändige Bediener, anpassen zu können, kann der Arbeitskopf auch um eine zur Längsrichtung des Stieles parallele Achse schwenkbar, insbesondere kann die Handgriffanordnung um die Längsachse des Stieles relativ zu diesem drehbar und feststellbar sein.

Vorteilhafterweise ist der Abstand des Arbeitskopfes von der Handgriffanordnung einstellbar. Die wirksame Länge des Stieles kann also eingestellt werden. Die Länge des Stieles selbst kann beispielsweise durch Einstecken bzw. Zusammenstecken weiterer Stielabschnitte verlängert bzw. durch Herausnehmen einzelner Stielabschnitte verkürzt werden. Vorzugsweise ist die Länge des Stieles jedoch teleskopartig, insbesondere stufenlos, einstellbar. In Weiterbildung der Erfindung ist der Stiel teleskopartig in die Handgriffanordnung ein- und ausfahrbar und kann in jeder gewünschten Stellung stufenlos festgeklemmt werden. Die teleskopartige Aufnahme des Stieles in der Handgriffanordnung erlaubt auch eine Verdrehung des Stieles um seine Längsachse relativ zu der Handgriffanordnung.

Vorzugsweise ist zum Schwenken des Arbeitskopfes zwischen dem Arbeitskopf und dem Stiel eine Schwenkvorrichtung vorgesehen, die ein erstes dem Stiel zugeordnetes Gelenkteil und ein zweites dem Arbeitskopf zugeordnetes Gelenkteil aufweist, die miteinander schwenkbar verbunden sind. Eine Feststellvorrichtung, mit der der Arbeitskopf in vorbestimmten Winkelstellungen festgestellt werden kann, besitzt vorzugsweise ein Feststellelement, durch das die beiden Gelenkteile relativ zueinander feststellbar, insbesondere formschlüssig miteinander verriegelbar sind. Die beiden Gelenkteile könnten auch kraftschlüssig bzw. reibschlüssig relativ zueinander festgestellt werden, jedoch besitzt eine formschlüssige Verriegelung den Vorteil, daß mit geringen Bedienkräften eine sichere Verriegelung, die auch hohe Kräfte aufnimmt, erreicht werden kann. Das Feststellelement kann integral an einem oder beiden der Gelenkteile ausgebildet sein. Beispielsweise können die beiden Gelenkteile unter elastischer Vorspannung ineinander greifen. Vorzugsweise jedoch ist das Feststellelement ein separates, bewegliches Teil, das die beiden Gelenkteile miteinander verriegelt.

Gemäß einer bevorzugten Ausführung der Erfindung sind zumindest ein Paar zu einer Schwenkachse des Arbeitskopfes koaxialer, nebeneinander angeordneter Verzahnungen, die jeweils an einem der beiden Gelenkteile vorgesehen sind, und ein Rastverzahnungselement vorgesehen, das zwischen einer ersten Stellung, in der das Rastelement mit beiden Verzahnungen in Eingriff ist und diese sperrt, und einer zweiten Stellung beweglich ist, in der das Rastelement mit höchstens einer der beiden Verzahnungen in Eingriff ist und eine Relativbewegung der beiden Verzahnungen gestattet. Das Rastelement ist also zwischen einer Sperrstellung, in der dieses vorzugsweise vorgespannt ist und eine Schwenkbewegung des Arbeitskopfes blockiert, und einer Schwenkstellung, in der der Arbeitskopf frei schwenkbar ist, beweglich.

Um ein sicheres Feststellen des Arbeitskopfes zu erreichen, ist vorzugsweise auf gegenüberliegenden Seiten des Arbeitskopfes jeweils ein Feststellungselement vorgesehen. Zweckmäßigerweise sind die beiden Feststellelemente in einander entgegengesetzten Richtungen beweglich, um betätigt zu werden. Die Feststellvorrichtung weist also vorzugsweise ein Paar gegenüberliegend angeordnete Feststellelemente, insbesondere Rastverzahnungselemente, auf, die jeweils in eine Sperrstellung vorgespannt sind und durch Zusammendrücken, das vorzugsweise mit einer Hand erfolgen kann, die Schwenkvorrichtung freigeben, so daß der Arbeitskopf geschwenkt werden kann.

In Weiterbildung der Erfindung ist der Antrieb für das Schneidwerkzeug im Bereich des Arbeitskopfes angeordnet. Zum Antrieb des Schneidwerkzeuges kann ein Elektromotor vorgesehen sein, der zweckmäßigerweise derart angeordnet ist, daß sich eine Längsachse einer Motorwelle in einer Richtung senkrecht zur Schwenkachse des Arbeitskopfes erstreckt. Die rotatorische Ausgangsbewegung des Motors kann durch ein Getriebe, insbesondere durch ein Exzentergetriebe, in eine oszillierende translatorische Bewegung des Schneidwerkzeuges, insbesondere eines Schneidmessers, umgewandelt werden.

Die Anordnung des Antriebes im Bereich des Arbeitskopfes besitzt den Vorteil, daß die Übertragung der Antriebsbewegung des Motors auf das Schneidwerkzeug konstruktiv einfach ist und das Gesamtgewicht des Antriebes sehr gering ist, da die unmittelbare Nähe des Antriebes an dem anzutreibenden Teil keine weite Übertragung der Antriebsbewegung mittels zusätzlicher Übertragungsglieder erfordert.

Zur Energieversorgung und/oder zur Steuerung des im Bereich des Arbeitskopfes angeordneten Antriebes ist vorzugsweise im Inneren des Stieles ein Kabel angeordnet, das den Antrieb mit der Handgriffanordnung verbindet. Vorzugsweise ist das Kabel im Inneren des Stieles spiralförmig geführt. Dies besitzt den Vorteil, daß eine Verstellung der Stiellänge durch das Kabel von selbst ausgeglichen wird.

Der Antrieb kann auch vom Arbeitskopf beabstandet angeordnet sein, insbesondere im Bereich der Handgriffanordnung, wobei zur Verbindung des Antriebes mit dem Arbeitskopf eine flexible Welle vorgesehen sein kann. Vorzugsweise kann der Antrieb im Bereich eines hinteren Griffteiles der Handgriffanordnung angeordnet, insbesondere in dieses integriert sein. Eine Anordnung des Antriebes im Bereich der Handgriffanordnung reduziert das Gewicht des Arbeitskopfes und bewirkt eine günstige Gewichtsverteilung.

Gemäß einer bevorzugten Ausführungsform der Erfindung ist der Antrieb als Netzantrieb ausgebildet. Hierzu kann ein Anschlußkabel aus der Handgriffanordnung nach außen geführt sein. Durch den Netzantrieb kann eine hohe Schneidleistung über ein beliebige Dauer erzielt werden. Darüber hinaus besitzt ein netzbetreibbarer Antrieb ein sehr geringes Gewicht.

Gemäß einer anderen Ausführungsform der Erfindung ist der Antrieb netzunabhängig betreibbar. Dies besitzt den Vorteil, daß die Heckenschere unabhängig von einem Netzanschluß betrieben werden kann. Auch ein die Handhabung der Heckenschere mitunter störendes Anschlußkabel ist nicht erforderlich. Zum netzunabhängigen Betrieb der Heckenschere ist ein Energiespeicher zur Energieversorgung vorgesehen, wobei der Energiespeicher, insbesondere ein Akku, im Bereich der Handgriffanorndung angeordnet ist. Hierdurch ist die Heckenschere bzgl. ihres Schwerpunktes ausgetrimmt. Das Gewicht des Energiespeichers wird in unmittelbarer Körpernähe, d.h. im Bereich der Handgriffanordnung geführt und bewirkt keine ungünstigen Hebelverhältnisse. Der Arbeitskopf ist durch das Gewicht des Energiespeichers nicht belastet und kann leicht bewegt werden.

Um die Handhabung zu erleichtern, besitzt die Handgriffanordnung vorteilhafterweise zumindest zwei Griffteile, die voneinander beabstandet sind und sich in unterschiedlichen Richtungen erstrecken. Vorzugsweise ist zumindest eines der Griffteile ein- und feststellbar. Hierdurch kann die Handgriffanordnung zum einen ergonomisch an den jeweiligen Handund Armapparat des entsprechenden Bedieners angepaßt werden. Zum anderen kann die Heckenschere bei Verstellung der Stiellänge oder der Ausrichtung des Arbeitskopfes durch eine entsprechende Einstellung der Griffteile ausgetrimmt werden. Beispielsweise kann dann, wenn der Stiel verlängert wird, ein vorderers Griffteil nach vorne, d.h. von einem hinteren Griffteil wegbewegt werden, um zum einen die Hebelwirkung der beiden Griffteile dem längeren Stiel anzupassen und zum anderen, insbesondere dann, wenn ein relativ schwerer Energiespeicher im Bereich der Handgriffanordnung vorgesehen ist, die Gewichtskräfte des Arbeitskopfes mit der des Energiespeichers in etwa im Gleichgewicht zu halten.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen verwirklicht sein und vorteilhafte sowie für sich schutzfähige Ausführungen darstellen können, für die hier Schutz beansprucht wird.

Nachfolgend wird die Erfindung anhand eines AusführungsbeiSpieles und zugehöriger Zeichnungen näher erläutert. In diesen zeigen:
- Fig. 1: eine Draufsicht einer Heckenschere gemäß einer bevorzugten Ausführungsform der Erfindung, wobei in der Darstellung von links nach rechts eine Handgriffanordnung mit mehreren Griffteilen, ein Stiel und ein Arbeitskopf mit einem balkenförmigen Schneidwerkzeug dargestellt sind, wobei der Stiel verkürzt wiedergegeben ist;
- Fig. 2: eine Seitenansicht der Heckenschere aus Fig. 1 in einer Teilschnittdarstellung, bei der Teile der Handgriffanordnung und des Stieles im Schnitt dargestellt sind;
- Fig. 3: eine Seitenansicht des Arbeitskopfes, die den Arbeitskopf in verschiedenen Stellungen relativ zu dem Stiel zeigt und
- Fig. 4: eine Explosionsdarstellung des Arbeitskopfes, die eine Verstellvorrichtung zur Schwenkverstellung des Arbeitskopfes relativ zu dem Stiel zeigt.

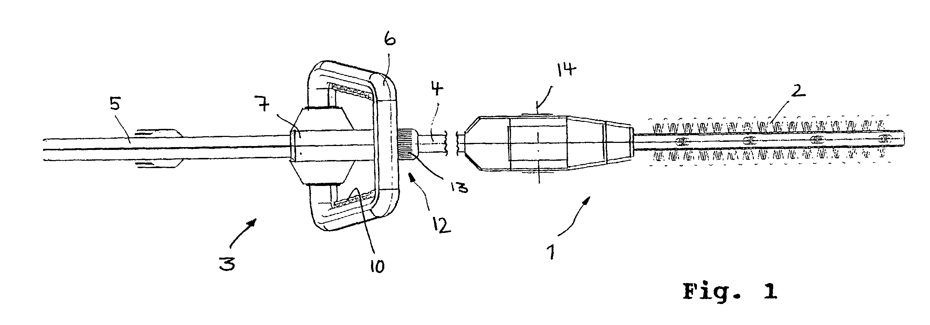

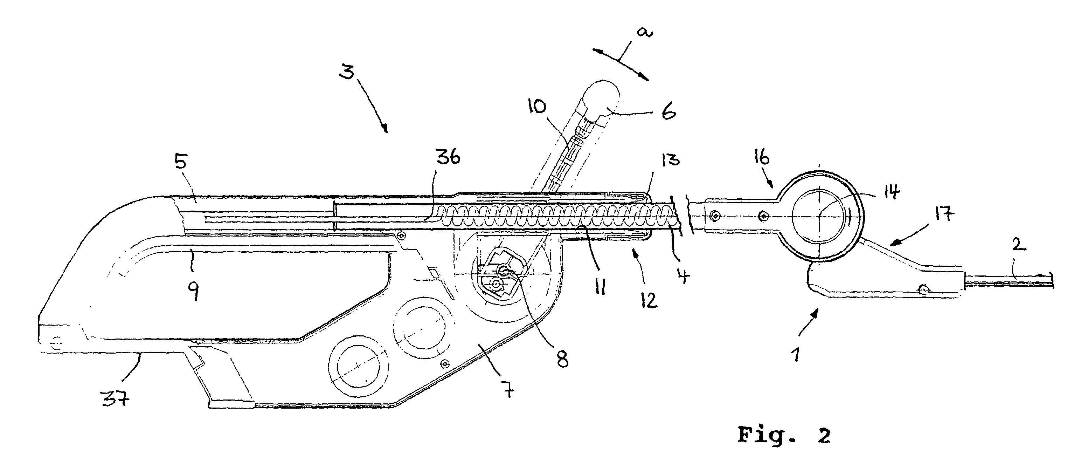

Die motorbetriebene Heckenschere besitzt grundsätzlich einen Arbeitskopf 1 mit einem balkenförmigen Schneidwerkzeug 2 und eine von dem Arbeitskopf 1 getrennte Handgriffanordnung 3. Die Handgriffanordnung 3 ist über einen Stiel 4 mit dem Arbeitskopf 1 verbunden (Fig. 1 und 2).

Alternativ zu einem balken- bzw. blattartigen Schneidwerkzeug könnte das Gerät auch nach dem Kreissägenprinzip arbeiten.

Die Handgriffanordnung besitzt ein erstes, hinteres Griffteil 5 und ein zweites vorderes Griffteil 6. Das hintere Griffteil 5 besitzt einen sich koaxial zu dem Stiel 4 erstreckenden Greifabschnitt sowie einen sich daran anschließenden zur Längsrichtung des Stieles 4 abgewinkelten Greifabschnitt (Fig. 2). Das vordere Griffteil 6 ist im wesentlichen als ringförmiger im Querschnitt trapezförmiger Bügel ausgebildet, der einen sich quer über den Stiel 4 erstreckenden oberen Greifabschnitt sowie zwei seitliche, nach vorne geneigte Greifabschnitte besitzt, die mit dem oberen Greifabschnitt verbunden sind und diesen mit einem gehäuseartigen Grundkörper 7 verbinden, der auch mit dem hinteren Griffteil 5 verbunden ist.

Die Handgriffanordnung 3 ist mehrteilig ausgebildet derart, daß das vordere Griffteil 6 relativ zu dem hinteren Griffteil 5 einstellbar ist. Wie in Fig. 2 gezeigt, kann das vordere Griffteil 6 um eine Achse 8, die durch die Befestigungspunkte des Griffteiles 6 an dem Grundkörper 7 bestimmt ist, gemäß dem Pfeil a in Fig. 2 nach vorne und hinten geschwenkt werden. Hierdurch kann zum einen die Handgriffanordnung 3 an den jeweiligen Bediener und zum anderen an die entsprechende Einstellung des Stieles und des Arbeitskopfes angepaßt werden, wie später noch näher erläutert werden wird.

Um den Antrieb der Heckenschere ein- und auszuschalten, ist eine Zweihandschaltung vorgesehen. Sowohl an dem hinteren Griffteil 5 als auch an dem vorderen Griffteil 6 sind jeweils Schalttasten bzw. -hebel 9 und 10 (Fig. 1 und 2) vorgesehen, die beim Umgreifen der jeweiligen Griffteile in deren Inneres gedrückt werden können und dort auf entsprechende Mikroschalter wirken, die bei gleichzeitiger Betätigung den Antrieb einschalten. Die dem vorderen Griffteil 6 zugeordnete Schalttaste 10, die mehrteilig sein kann, ist auf einer Innenseite des ringförmigen Griffteiles 6 angeordnet und erstreckt sich sowohl an dem oberen Greifabschnitt als auch an den beiden seitlichen Greifabschnitten. Die dem hinteren Griffteil 5 zugeordnete Schalttaste 9 erstreckt sich ebenfalls entlang der gesamten Länge des Griffteiles.

Die Handgriffanordnung 3 ist vorzugsweise aus Kunststoff spritzgegossen.

Der Stiel 4 ist ein einstückiges Rohr, das mit einem seiner Enden mit dem Arbeitskopf 1 verbunden ist und mit seinem anderen Ende in einer Aufnahme 11 der Handgriffanordnung 3 verschieblich aufgenommen ist. Die Aufnahme 11 ist dabei als Schiebeführung ausgebildet, die im Querschnitt dem im wesentlichen zylindrischen Profil des Stieles 4 entspricht. Der Stiel 4 ist also teleskopartig in die Handgriffanordnung 3 einschiebbar und kann aus dieser ausgefahren werden derart, daß die effektive Länge des Stieles 4, d.h. der Abstand der Handgriffanordnung 3 von dem Arbeitskopf 1, stufenlos einstellbar ist. Darüber hinaus kann der Stiel 4 in der Aufnahme 11 um seine Längsachse relativ zu der Handgriffanordnung 3 gedreht werden. Der Arbeitskopf 1 mit dem Schneidwerkzeug 2 ist dementsprechend relativ zu der Handgriffanordnung 3 um die Längsachse des Stieles 4 schwenkbar.

Zur Feststellung des Stieles 4 relativ zur Handgriffanordnung 3 ist eine Klemmvorrichtung 12 vorgesehen, die fest mit der Handgriffanordnung 3 verbunden ist und den Stiel 4 am Umfang festklemmen kann. Die Klemmvorrichtung 12 besitzt eine Klemmutter 13, die mit einem konisch ausgebildeten Klemmring zusammenwirkt, um den Stiel 4 an dessen Umfang zu klemmen und relativ zu der Handgriffanordnung 3 zu fixieren.

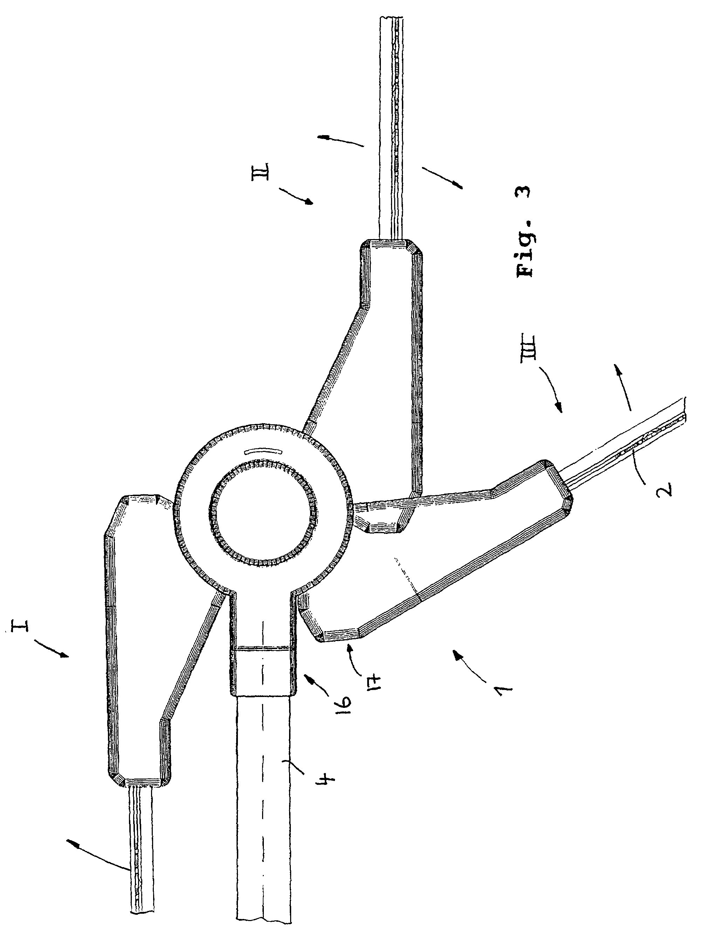

Wie in Fig. 3 gezeigt ist, ist der Arbeitskopf 1 mit dem Schneidwerkzeug 2 relativ zu dem Stiel 4 um eine zu dessen Längsrichtung senkrechte Schwenkachse 14 schwenkbar gelagert.

Der Arbeitskopf 1 kann dabei in verschiedenen Stellungen festgestellt werden, um die Ausrichtung des Schneidwerkzeuges 2 an unterschiedlich zu schneidende Flächen anzupassen, wie später noch näher erläutert werden wird.

Der Schwenkbereich des Arbeitskopfes 1 um die Schwenkachse 14 erstreckt sich dabei auf beide Seiten, d.h. gemäß Fig. 3 sowohl unterhalb als auch oberhalb des Stieles 4 und beträgt insgesamt in etwa 225°. Ausgehend von einer Transportstellung I, in der das Schneidwerkzeug 2 zu dem Stiel 4 zurückgeklappt ist und zu diesem parallel benachbart angeordnet ist (Fig. 3), kann der Arbeitskopf 1 um die Schwenkachse 14 nach vorne in verschiedene Schneidstellungen geschwenkt werden. Insbesondere zum Schneiden senkrechter Heckenflächen kann der Arbeitskopf in eine Grundschneidstellung II (Fig. 3) gebracht werden, in der das Schneidwerkzeug 2 in Richtung des Stieles 4 angeordnet ist und den Stiel 4 nach vorne fortsetzt. Darüber hinaus kann der Arbeitskopf 1 bezogen auf die Seite der Transportstellung I, überstreckt werden, d.h. der Arbeitskopf 1 kann auch in eine gemäß Fig. 3 nach unten geneigte Stellung III geschwenkt werden. Hierdurch kann das Schneidwerkzeug 3, das eine bevorzugte Schneidseite besitzt, nämlich die in Fig. 3 untere Seite der Stellung II, immer mit der richtigen Seite auf die zu schneidende Fläche der Hecke aufgesetzt werden. Insbesondere kann hierdurch auch eine im wesentlichen horizontale Oberseite einer Hecke bequem von unten am Boden stehend geschnitten werden. Der Arbeitsbereich des Schneidwerkzeuges 3 kann also auf beide Seiten des Stieles 4 eingestellt werden. Der Arbeitsbereich reicht dabei von der in Fig. 3 gezeigten überstreckten Stellung III des Arbeitskopfes 1 bis zu einer nicht gezeigten, zwischen den Stellungen I und II liegenden Stellung des Arbeitskopfes 1, in der dieser in etwa mit dem Stiel 4 einen rechten Winkel einschließt. Der Arbeitsbereich wird dabei durch einen nicht näher dargestellten Schalter begrenzt, der den Antrieb des Schneidwerkzeuges 3 ausschaltet, sobald der Arbeitskopf 1 aus dem Arbeitsbereich hinaus zu der Transportstellung 1 hin geschwenkt wird, d.h. der Schalter unterbricht die Energieversorgung des Antriebes dann, wenn der Winkel zwischen dem Stiel 4 und dem Schneidwerkzeug 3 weniger als 90° beträgt. Als Schalter kann ein Endschalter vorgesehen sein, der beim Zurückschwenken des Schneidwerkzeuges 3 betätigt wird und den Stromkreis unterbricht.

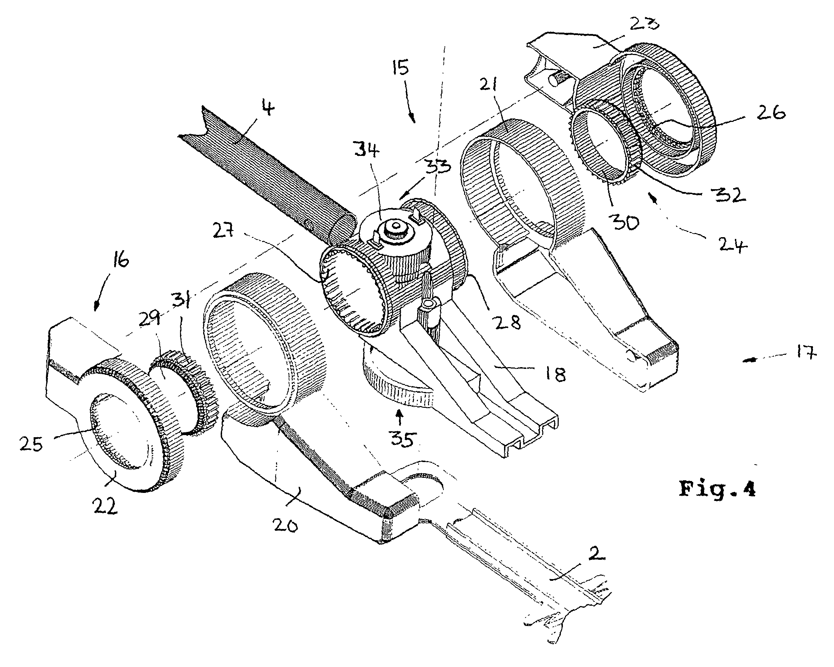

Um die beschriebene Schwenkbewegung des Arbeitskopfes 1 zu ermöglichen, ist zwischen dem Stiel 4 und dem Arbeitskopf 1 eine Schwenkvorrichtung 15 vorgesehen, die in Fig. 4 gezeigt ist. Die Schwenkvorrichtung 15 besitzt grundsätzlich ein erstes Gelenkteil 16 und ein zweites Gelenkteil 17, die miteinander verbunden sind und relativ zueinander um eine zu dem Stiel 4 senkrechte Achse drehbar sind. Das erste Gelenkteil 16 ist als Stielhalter ausgebildet und mit dem Stiel 4 fest verbunden. Das zweite Gelenkteil 17 ist dem Schneidwerkzeug 2 zugeordnet. Das zweite Gelenkteil 17 besitzt einen Schneidwerkzeughalter 18, an dem das Schneidwerkzeug 2 gelagert ist. Das Schneidwerkzeug 2 besitzt üblicherweise ein Obermesser und ein Untermesser, die translatorisch relativ zueinander bewegt werden können, um die gewünschte Scherwirkung zu erzielen.

Zwei Gelenkschalen 20, 21 können auf gegenüberliegenden Seiten des Schneidwerkzeughalters 18 an diesen jeweils in Richtung der Schwenkachse 14 angesetzt werden derart, daß der Schneidwerkzeughalter 18 sandwichartig zwischen den beiden Gelenkschalen 20 angeordnet ist. Die beiden Gelenkschalen 20, 21 bilden eine Schwenkführung und wirken mit dem ersten Gelenkteil 16 zusammen, das relativ zu den beiden Gelenkschalen 20 um die Schwenkachse 14 drehbar ist. Das erste Gelenkteil 16 besitzt dabei selbst zwei Gelenkschalen 22, 23, die wiederum auf gegenüberliegenden Seiten des zweiten Gelenkteiles 17, d.h. der beiden Gelenkschalen 20, 21, an diese ansetzbar sind und diese sandwichartig zwischen sich aufnehmen. Das zweite Gelenkteil 17 ist also nach Art einer Schwinge an dem ersten Gelenkteil 16 gelagert, wobei die Gelenkschalen 20, 21 des zweiten Gelenkteiles 17 zwischen den beiden Gelenkschalen 22, 23 des ersten Gelenkteiles 16 angeordnet und durch diese drehgeführt sind (Fig. 4).

Um die beiden Gelenkteile 16, 17 relativ zueinander in gewünschten Stellungen feststellen zu können, ist eine Feststellvorrichtung 24 vorgesehen. Die beiden Gelenkschalen 22, 23 des ersten Gelenkteiles 16 weisen dabei zwei Rastverzahnungen 25, 26 auf, die als Innenverzahnungen integral an den beiden Gelenkschalen ausgebildet sind und koaxial zu der Schwenkachse 14 angeordnet sind. Das zweite Gelenkteil 17 weist an dem Schneidwerkzeughalter 18 ein paar Gegenrastverzahnungen 27, 28 auf, die ebenfalls als zu der Schwenkachse 14 koaxiale Innenverzahnungen ausgebildet sind und jeweils benachbart zu den Rastverzahnungen 25 und 26 angeordnet sind. Um die beiden Gelenkteile 16 und 17 miteinander sperrzuverriegeln sind ein paar Rastverzahnungselemente 29, 30 vorgesehen, die beide koaxial zu der Schwenkachse 14 angeordnet sind. Die beiden Rastverzahnungselemente 29 und 30 besitzen jeweils eine Sperrverzahnung 31, die am Außenumfang der Rastverzahnungselemente 29, 30 vorgesehen sind und im wesentlichen komplementär zu den Rastverzahnungen 25, 26 bzw. den Gegenverzahnungen 27, 28 ausgebildet sind. Die Rastverzahnungselemente 29, 30 sind in ihrer verriegelnden Stellung sowohl mit den Rastverzahnungen 25, 26 als auch mit den Gegenverzahnungen 27, 28 in Eingriff. Um die sperrende Verriegelung zu lösen, sind die Rastverzahnungselemente 29, 30 in Richtung der Schwenkachse 14 verschieblich derart, daß die Sperrverzahnungen 31 von den Rastverzahnungen 25, 26 außer Eingriff gebracht werden können. Die Rastverzahnungen 25, 26 und die Gegenverzahnungen 27, 28 besitzen den gleichen Durchmesser, so daß die Sperrverzahnungen 31, 32 der Rastverzahnungselemente in beiden gleiten können. Die Rastverzahnungselemente 29, 30 werden durch eine nicht dargestellte Federeinrichtung nach außen, d.h. zu den Rastverzahnungen 25, 26 hin, vorgespannt derart, daß die Rastverzahnungselemente 29, 30 sowohl mit den Rastverzahnungen 25, 26 als auch mit den Gegenverzahnungen 27, 28 in Eingriff sind. Die Rastverzahnungselemente 29, 30 werden dabei jeweils gegen einen Anschlag an den Gelenkschalen 22, 23 des ersten Gelenkteiles 16 gedrückt. Durch Zusammendrücken der beiden Rastverzahnungselemente 29, 30 entgegen der Federvorspannungen gelangen diese von den Rastverzahnungen 25, 26 außer Eingriff und werden ganz in die Gegenverzahnungen 27, 28 hineingeschoben. In dieser zusammengedrückten Stellung ist das zweite Gelenkteil 17 zusammen mit den Rastverzahnungselementen 29, 30 relativ zu dem ersten Gelenkteil 16 schwenkbar. Die Verriegelung der Schwenkvorrichtung 15 durch ein paar Rastverzahnungselemente besitzt den Vorteil, daß auch relativ hohe Schwenkkräfte aufgenommen werden können, ohne daß an den Verzahnungen eine zu hohe Flächenpressung auftritt. Die beiden Rastverzahnungselemente 29, 30 sind vorzugsweise derart angeordnet, daß sie mit einer Hand in ihre nicht sperrende Stellung zusammengedrückt werden können.

Wie in Fig. 4 gezeigt ist, ist ein Antrieb 33 für das Schneidwerkzeug 2 in den Schneidwerkzeughalter 18 integriert. Ein Elektromotor 34 ist dabei zwischen den beiden Gegenverzahnungen 27, 28 innerhalb der beiden Gelenkschalen 20, 21 angeordnet derart, daß sich eine Längsachse des Motors, d.h. dessen Rotationsachse, senkrecht zu der Schwenkachse 14 erstreckt und diese vorzugsweise schneidet. Zwischen dem Elektromotor 34 und dem Schneidwerkzeug 2 ist ein Exzentergetriebe 35 vorgesehen, um die rotatorische Antriebsbewegung des Elektromotors 34 in die translatorische Scherbewegung des Schneidwerkzeuges 2 umzusetzen.

Wie in Fig. 4 gezeigt ist, bilden die Gelenkschalen 20, 21 des zweiten Gelenkteiles 17 und die Gelenkschalen 22, 23 des ersten Gelenkteiles 16 ein den Schneidwerkzeughalter 18 umgebendes Gehäuse. Die Vorspannung der Rastverzahnungselemente 29 und 30 gegen einen ringförmigen Anschlag an den Gelenkschalen 22 und 23 dichtet dabei das Gehäuse gegen Schmutz und Staub ab. Die ersten und zweiten Gelenkteile 16 und 17, der Schneidwerkzeughalter 18 sowie die Rastverzahnungselemente 29 und 30 sind dabei vorzugsweise aus Kunststoff spritzgegossen.

Wie Fig. 2 zeigt, ist zur Energieversorgung des Antriebes 33 ein Kabel vorgesehen, das mit dem Antrieb 33 verbunden ist und in die Handgriffanordnung 3 geführt ist. Das Kabel 36 erstreckt sich dabei im Inneren des Stieles 4. Um die teleskopartige Längenverstellung des Stieles 4 von selbst auszugleichen, ist das Kabel 36 im Inneren des Stieles 4 spiralförmig geführt.

Zur Energieversorgung des Antriebes 33 ist dabei ein Akku vorgesehen, der vorzugsweise an einem hinteren, d.h. dem Stiel 4 abgewandten Ende der Handgriffanordnung 3, angeordnet ist. Dies besitzt den Vorteil, daß der Akku ein Gegengewicht zu dem Arbeitskopf 1 bildet derart, daß die Heckenschere insgesamt in Bezug auf die Griffteile der Handgriffanordnung 3 möglichst gut ausgetrimmt ist. Die Handgriffanordnung 3 besitzt vorzgsweise eine Akkuaufnahme 37, in der der entsprechende Akku leicht auswechselbar aufgenommen ist. Das Kabel 36 ist mit dem Akku verbunden.

Gemäß einer Ausführungsform der Erfindung kann der Antrieb anstelle im Bereich des Arbeitskopfes auch im Bereich der Handgriffanordnung 3 angeordnet, insbesondere in das hintere Griffteil 5 integriert sein. Der Antrieb, beispielsweise ein Elektromotor, kann durch ein Übertragungsgetriebe, insbesondere eine flexible Welle, die sich im Inneren des Stieles 4 erstreckt, mit dem Schneidwerkzeug 2 verbunden sein, um dieses anzutreiben. Der Antrieb kann bei einer derartigen Anordnung direkt mit einem Akku verbunden sein.

Gemäß einer weiteren Ausführung der Erfindung kann der Antrieb 33 auch als Netzantrieb ausgebildet sein. In diesem Fall ist das Kabel 36 vorzugsweise an einem hinteren Ende der Handgriffanordnung 3 aus dieser nach außen geführt.

Zur Vereinfachung der Bedienung können weitere Antriebe, insbesondere elektrische Stellmotoren zur Längeneinstellung des Stieles und/oder zur Schwenklageneinstellung des Arbeitskopfes vorgesehen sein.

Nachfolgend wird die Funktion und Wirkungsweise der Heckenschere näher erläutert.

Ausgehend von der in Fig. 3 gezeigten Transportstellung I wird zunächst das Schneidwerkzeug 2 in die gewünschte Arbeitsstellung geschwenkt. Hierzu werden die beiden Rastverzahnungselemente 29 und 30 zusammengedrückt, so daß das Schneidwerkzeug 2 relativ zu dem Stiel 4 um die Schwenkachse 14 geschwenkt werden kann. In der gewünschten Stellung werden die Rastverzahnungselemente 29 und 30 losgelassen derart, daß diese durch die Federvorspannung nach außen gedrückt werden und ggf. unter leichtem Weiterschwenken des Schneidwerkzeuges 2 in die Rastverzahnungen 25 und 26 einrasten.

Um bei zusammengedrückten Rastverzahnungselementen 29 und 30 ein unkontrolliertes Schwenken des Schneidwerkzeuges 2 zu verhindern, können die beiden Gelenkteile 16 und 17 gegeneinander gespannt sein, um eine die Schwenkbewegung hemmende bzw. bremsende Reibung zu erzeugen. Die aneinander geführten Gelenkschalen 20, 21 und 22, 23 der beiden Gelenkteile 16 und 17 können an den sich berührenden Flächen auch eine leicht verzahnte bzw. geriffelte Oberfläche besitzen derart, daß das Schneidwerkzeug 2 unter elastischer Verformung der Gelenkschalen in kleinen Stufen weitergeschwenkt werden kann.

Nach Einstellung der gewünschten Winkelstellung des Schneidwerkzeuges 2 wird der Abstand des Arbeitskopfes 1 von der Handgriffanordnung 3 dadurch eingestellt, daß der Stiel 4 aus der Handgriffanordnung 3 bei gelöster Klemmvorrichtung 12 herausgezogen bzw. in diese hineingeschoben wird. Dabei wird gleichzeitig die Handgriffanordnung 3 relativ zu dem Stiel 4 in die gewünschte Stellung gedreht. Durch Anziehen der Klemmutter 13 wird der Stiel 4 dann in der gewünschten Stellung fixiert.

Entsprechend den jeweiligen Bedürfnissen des Bedieners kann dann das vordere Griffteil 6 um die Achse 8 entsprechend dem Pfeil a geschwenkt werden. Hierbei wird vorzugsweise das vordere Griffteil 6 desto weiter nach vorne, d.h. zu dem Arbeitskopf 1 hin geschwenkt, je größer der Abstand zwischen dem Arbeitskopf 1 und der Handgriffanordnung 3 eingestellt worden ist. Dies besitzt den Vorteil, daß zum einen die beiden Griffteile 5 und 6 einen größeren Hebelarm erhalten, um den größeren Abstand des Arbeitskopfes 1 von der Handgriffanordnung 3 aufzunehmen. Zum anderen kann insbesondere dann, wenn ein Akku am hinteren Ende der Handgriffanordnung 3 vorgesehen ist, das Gewicht der Heckenschere insgesamt austariert werden.

Die Anordnung des Arbeitskopfes 1 relativ zu der Handgriffanordnung 3 wird entsprechend der zu schneidenden Fläche eingestellt. Beispielsweise um die Oberseite einer hohen Hecke zu schneiden, wird der Stiel 4 weitestmöglich aus der Handgriffanordnung 3 herausgezogen und der Arbeitskopf 1 in die in Fig. 3 gezeigte Stellung III geschwenkt, um sicher am Boden stehend mit der bevorzugten Schneidseite des Schneidwerkzeuges 2 die Oberseite der Hecke oder des Strauches bearbeiten zu können.

Zur Bearbeitung senkrechter Flächen wird der Arbeitskopf 1 vorzugsweise in die in Fig. 3 gezeigte Stellung II geschwenkt. Entsprechend der zu bearbeitenden Höhe wird ebenfalls der Stiel 4 ein- oder ausgefahren. Durch die Verriegelungsverzahnung kann der Arbeitskopf 1 nahezu stufenlos in jede beliebige Schwenkstellung gebracht werden.

Um die Heckenschere in Betrieb zu setzen, werden dann die beiden Schalttasten 9 und 10 an den beiden Griffteilen 5 und 6 niedergedrückt.

## Patentansprüche

1. Motorbetriebene Heckenschere mit einem Arbeitskopf, der ein Schneidwerkzeug aufweist, einem Antrieb für das Schneidwerkzeug, und einer Handgriffanordnung zum Halten und Führen des Arbeitskopfes, wobei die Handgriffanordnung (3) durch einen Stiel (4) von dem Arbeitskopf (1) beabstandet und mit diesem verbunden ist, und der Arbeitskopf relativ zu der Handgriffanordnung einund feststellbar ist, **dadurch gekennzeichnet, daß** der Arbeitskopf (1) senkrecht zur Längsrichtung des Stieles (4) zu zwei gegenüberliegenden Seiten des Stieles in einem Arbeitsbereich von zumindest jeweils 30°,insbesondere in einem Arbeitsbereich von insgesamt zumindest 180°, schwenkbar ist, wobei der Arbeitskopf (1) über den Arbeitsbereich hinaus in eine Transportstellung (1) schwenkbar ist, in der das Schneidwerkzeug (2) zu dem Stiel (4) zurückgeklappt und zu diesem parallel angeordnet ist, wobei eine Schalteinrichtung zur Abschaltung des Antriebes beim Schwenken des Arbeitskopfes aus dem Arbeitsbereich vorgesehen ist.

2. Heckenschere nach Anspruch 1, **dadurch gekennzeichnet, daß** der Arbeitskopf (1) relativ zu der Handgriffanordnung (3) um zumindest eine Achse (14) schwenkbar ist, wobei der Arbeitskopf relativ zu der Handgriffanordnung auch um eine zur Längsachse des Stieles parallele Achse schwenkbar ist.

3. Heckenschere nach Anspruch 1 oder 2, **dadurch gekennzeichnet, daß** der Abstand des Arbeitskopfes (1) von der Handgriffanordnung (3) einstellbar ist, wobei vorzugsweise eine wirksame Länge des Stieles (4) einstellbar ist.

4. Heckenschere nach zumindest einem der Ansprüche 1 bis 3, **dadurch gekennzeichnet, daß** die Handgriffanordnung (3) relativ zu dem Stiel (4) ein- und feststellbar ist.

5. Heckenschere nach zumindest einem der Ansprüche 1 bis 4, **dadurch gekennzeichnet, daß** zwischen dem Arbeitskopf (1) und dem Stiel (4) eine Schwenkvorrichtung (15) zum Schwenken des Arbeitskopfes und eine Feststellvorrichtung (24) zum Feststellen des Arbeitskopfes in vorbestimmten Winkelstellungen vorgesehen sind, wobei vorzugsweise ein erstes dem Stiel (4) zugeordnetes Gelenkteil (16), ein zweites dem Arbeitskopf (1) zugeordnetes Gelenkteil (17), das mit dem ersten schwenkbar verbunden ist und ein Feststellelement (29, 30) zum Feststellen der beiden Gelenkteile relativ zueinander vorgesehen sind, wobei die beiden Gelenkteile durch das Feststellelement formschlüssig miteinander verriegelbar sind.

6. Heckenschere nach zumindest einem der Ansprüche 1 bis 5, **dadurch gekennzeichnet, daß** auf gegenüberliegenden Seiten des Arbeitskopfes (1) ein Paar Feststellelemente (29, 30) zum Feststellen des Arbeitskopfes in vorbestimmten Stellungen vorgesehen sind, wobei die beiden Feststellelemente in einander entgegengesetzen Richtungen zum Feststellen bzw. Lösen des Arbeitskopfes beweglich sind.

7. Heckenschere nach zumindest einem der Ansprüche 1 bis 6, **dadurch gekennzeichnet, daß** zumindest ein Paar zu einer Schwenkachse (14) des Arbeitskopfes (1) koaxialer, nebeneinander angeordneter Verzahnungen (25, 26; 27, 28) vorgesehen sind, die jeweils einem Stielhalter (16) bzw. einem Schneidwerkzeughalter (18) zugeordnet sind, wobei zumindest ein Rastverzahnungselement (29, 30) vorgesehen ist, das zwischen einer ersten Stellung, in der das Rastverzahnungselement mit beiden Verzahnungen in Eingriff ist, und einer zweiten Stellung beweglich ist, in der das Rastverzahnungselement mit höchstens einer der beiden Verzahnungen in Eingriff ist.

8. Heckenschere nach zumindest einem der Ansprüche 1 bis 7, **dadurch gekennzeichnet, daß** der Antrieb (33) in den Arbeitskopf (1) integriert ist

9. Heckenschere nach zumindest einem der Ansprüche 1 bis 8, **dadurch gekennzeichnet, daß** ein Kabel (36) zur Energieversorgung und/oder Steuerung des Antriebes (33) im Inneren des Stieles (4) angeordnet ist.

10. Heckenschere nach zumindest einem der Ansprüche 1 bis 9, **dadurch gekennzeichnet, daß** der Antrieb von dem Arbeitskopf (1) beabstandet, insbesondere im Bereich der Handgriffanordnung angeordnet, ist, wobei der Antrieb durch eine Übertragungseinrichtung mit dem Schneidwerkzeug (2) verbunden ist.

11. Heckenschere nach zumindest einem der Ansprüche 1 bis 10, **dadurch gekennzeichnet, daß** ein Energiespeicher zur Energieversorgung des Antriebes (33) im Bereich der Handgriffanordnung (3) angeordnet ist.

12. Heckenschere nach zumindest einem der Ansprüche 1 bis 11, **dadurch gekennzeichnet, daß** die Handgriffanordnung (3) zumindest zwei Griffteile (5, 6) aufweist, die voneinander beabstandet sind und sich in unterschiedlichen Richtungen erstrecken.

## Claims

1. Motor-driven hedge trimmer with a working head having a cutting tool, a drive for the cutting tool and a handle arrangement for holding and guiding the working head, the handle arrangement (3) being spaced by a shaft (4) from the working head (1) and is connected thereto and the working head is adjustable and fixable relative to the handle arrangement, **characterized in that** the working head (1) is pivotable perpendicular to the longitudinal direction of the shaft (4) to two opposite sides of the shaft in a working range of in each case at least 30ø, particularly in a working range of in all at least 180ø, the working head (1) being pivotable over and beyond the working range into a transporting position (1), where the cutting tool (2) is folded back to the shaft (4) and is positioned parallel thereto, a control mechanism being provided for disconnecting the drive on pivoting the working head out of the working range.

2. Hedge trimmer according to claim 1, **characterized in that** the working head (1) is pivotable about at least one axis (14) relative to the handle arrangement (3), the working head also being pivotable about an axis parallel to the longitudinal axis of the shaft relative to the handle arrangement.

3. Hedge trimmer according to claim 1 or 2, **characterized in that** the distance between the working head (1) and the handle arrangement (3) is adjustable and preferably an effective length of the shaft (4) is adjustable.

4. Hedge trimmer according to at least one of the claims 1 to 3, **characterized in that** the handle arrangement (3) is adjustable and fixable relative to the shaft (4).

5. Hedge trimmer according to at least one of the claims 1 to 4, **characterized in that** between the working head (1) and the shaft (4) are provided a pivoting device (15) for pivoting the working head and a fixing device (24) for fixing the working head in predetermined angular positions and preferably a first joint part (16) associated with the shaft (4), a second joint part (17) associated with the working head (1) and which is pivotably connected to the former and a fixing element (29, 30) for fixing the two joint parts relative to one another are provided, the two joint parts being positively lockable together by the fixing element.

6. Hedge trimmer according to at least one of the claims 1 to 5, **characterized in that** on opposite sides of the working head (1) are provided a pair of fixing elements (29, 30) for fixing the working head in predetermined positions, the two fixing elements being movable in opposite directions for fixing or releasing the working head.

7. Hedge trimmer according to at least one of the claims 1 to 6, **characterized in that** at least one pair of juxtaposed tooth systems (25, 26; 27, 28) coaxial to a pivoting axis (14) of the working head (1) are provided and are in each case associated with a shaft holder (16) or a cutting tool holder (18), at least one detent tooth element (29, 30) being provided which is movable between a first position in which the detent tooth element is in engagement with both tooth systems and a second position in which the detent tooth element is in engagement with at the most one of the two tooth systems.

8. Hedge trimmer according to at least one of the claims 1 to 7, **characterized in that** the drive (33) is integrated into the working head (1).

9. Hedge trimmer according to at least one of the claims 1 to 8, **characterized in that** a cable (36) is provided for power supply purposes and/or for controlling the drive (33) in the interior of the shaft (4).

10. Hedge trimmer according to at least one of the claims 1 to 9, **characterized in that** the drive is spaced from the working head (1) and is in particular located in the vicinity of the handle arrangement, the drive being connected by a transmission device to the cutting tool (2).

11. Hedge trimmer according to at least one of the claims 1 to 10, **characterized in that** a power storage device for supplying power to the drive (33) is located in the vicinity of the handle arrangement (3).

12. Hedge trimmer according to at least one of the claims 1 to 11, **characterized in that** the handle arrangement (3) has at least two spaced grip parts (5, 6) extending in different directions.

## Revendications

1. Taille-haies motorisée avec une tête de travail, qui présente un outil de coupe, avec un mécanisme d'entraînement pour l'outil de coupe et une structure de maniement pour la prise et le guidage de la tête de travail, la structure de maniement (3) étant écartée par un manche (4) de la tête de travail (1) et raccordée à celle-ci, et la tête de travail pouvant être ajustée et bloquée par rapport à la structure de maniement, **caractérisé en ce que** la tête de travail (1) est pivotable verticalement par rapport à la direction longitudinale du manche (4) des deux côtés du manche dans un domaine de travail d'au moins respectivement 30°, notamment dans un domaine de travail d'au moins respectivement 180° en tout, la tête de travail (1) pouvant être pivotée au-delà du domaine de travail dans une position de transport (I), dans laquelle l'outil de coupe (2) est disposé de manière repliée et parallèle par rapport au manche (4), un moyen de commande étant prévu pour la mise hors circuit du mécanisme d'entraînement pendant le pivotement de la tête de travail en dehors du domaine de travail.

2. Taille-haies d'après la revendication 1, **caractérisé en ce que** la tête de travail (1) peut être pivotée par rapport à la structure de maniement (3) au moins autour d'un axe (14), la tête de travail pouvant être pivotée par rapport à la structure de maniement également autour d'un axe parallèle à l'axe longitudinal du manche.

3. Taille-haies d'après la revendication 1 ou 2, **caractérisé en ce que** l'écart entre la tête de travail (1) et la structure de maniement (3) est ajustable, en étant de préférence ajustable une longueur effective du manche (4).

4. Taille-haies d'après au moins une des revendications de 1 à 3, **caractérisé en ce que** la structure de maniement (3) peut être ajustée et bloquée par rapport au manche (4).

5. Taille-haies d'après au moins une des revendications de 1 à 4, **caractérisé en ce que** entre la tête de travail (1) et le manche (4) sont prévus un moyen de pivotement (15) pour l'orientation de la tête de travail et un moyen de blocage (24) pour le blocage de la tête de travail dans des positions angulaires prédéterminées, étant prévus de préférence un premier élément articulé (16) associé au manche (4), un deuxième élément articulé (17) associé à la tête de travail (1) et raccordé de manière pivotable au premier élément articulé, et un élément de blocage (29, 30) pour le blocage des deux éléments articulés l'un par rapport à l'autre, les deux éléments articulés pouvant être verrouillés à engagement positif l'un par rapport à l'autre au moyen de l'élément de blocage.

6. Taille-haies d'après au moins une des revendications de 1 à 5, **caractérisé en ce qu'**aux deux côtés opposés de la tête de travail (1) une paire d'éléments de blocage (29, 30) est prévue pour la fixation de la tête de travail dans des positions prédéterminées, les deux éléments de blocage étant mobiles dans des directions opposées l'une par rapport à l'autre pour le blocage ou encore pour le déblocage de la tête de travail.

7. Taille-haies d'après au moins une des revendications de 1 à 6, **caractérisé en ce que** l'on prévoit au moins une paire de dentures (25, 26 ; 27, 28) coaxiales par rapport à un axe de pivotement (14) de la tête de travail (1) et disposées l'une à côté de l'autre, qui sont associées respectivement à un support de manche (16) ou encore à un support d'outil de coupe (18), en étant prévu au moins un élément de denture à crans (29, 30), mobile entre une première position, dans laquelle l'élément de denture à crans est en prise avec les deux dentures et une deuxième position, dans laquelle l'élément de denture à crans est en prise avec au plus une des deux dentures.

8. Taille-haies d'après au moins une des revendications de 1 à 7, **caractérisé en ce que** le mécanisme d'entraînement (33) est intégré dans la tête de travail (1).

9. Taille-haies d'après au moins une des revendications de 1 à 8, **caractérisé en ce qu'**un câble (36) pour l'alimentation en énergie et/ou pour la commande du mécanisme d'entraînement (33) est disposé à l'intérieur du manche (4).

10. Taille-haies d'après au moins une des revendications de 1 à 9, **caractérisé en ce que** le mécanisme d'entraînement est écarté de la tête de travail (1) et notamment disposé dans le domaine de la structure de maniement, le mécanisme d'entraînement étant raccordé avec l'outil de coupe (2) par un moyen de transmission.

11. Taille-haies d'après au moins une des revendications de 1 à 10, **caractérisé en ce qu'**un accumulateur d'énergie pour l'alimentation en énergie du mécanisme d'entraînement (33) est disposé dans le domaine de la structure de maniement (3).

12. Taille-haies d'après au moins une des revendications de 1 à 11, **caractérisé en ce que** la structure de maniement (3) présente au moins deux éléments de poignée (5, 6) écartés l'un de l'autre et s'étendant dans des directions différentes.
